Europäisches Patentamt

European Patent Office

Office européen des brevets

(19)

(11) Publication number: **0 103 083**
**B1**

## EUROPEAN PATENT SPECIFICATION

(12)

(45) Date of publication of patent specification: **30.09.87**

(51) Int. Cl.⁴: **H 04 Q 11/04**

(21) Application number: **83106042.1**

(22) Date of filing: **21.06.83**

(54) **Modular self-routing PCM switching network for distributed-control telephone exchanges.**

(30) Priority: **22.06.82 IT 6778982**

(43) Date of publication of application:
**21.03.84 Bulletin 84/12**

(45) Publication of the grant of the patent:
**30.09.87 Bulletin 87/40**

(84) Designated Contracting States:
**AT BE CH DE FR GB LI NL SE**

(56) References cited:
**EP-A-0 017 988**
**EP-A-0 034 776**
**EP-A-0 056 600**
**EP-A-0 089 683**
**EP-A-0 091 338**
**EP-A-0 097 360**

**INTERNATIONAL SWITCHING SYMPOSIUM,
21st-25th September 1981, Montreal, session
32 A, paper 1, pages 1-7 R. GALIMBERTI et al.:
"Proteo system: an overview"**

(73) Proprietor: **CSELT Centro Studi e Laboratori Telecomunicazioni S.p.A.
Via Guglielmo Reiss Romoli, 274
I-10148 Turin (IT)**

(72) Inventor: **Belforte, Piero
Via Fabbriche, 7
Torino (IT)**
Inventor: **Bondonno, Mario
Via Risorgimento, No. 1
I-10071 Borgaro Torinese (To) (IT)**
Inventor: **Bostica, Bruno
Via Gorizia, 165
Torino (IT)**
Inventor: **Pilati, Luciano
Via Sospello, 121
Torino (IT)**

(74) Representative: **Riederer Freiherr von Paar zu Schönau, Anton et al
Van der Werth, Lederer & Riederer Freyung 615
Postfach 2664
D-8300 Landshut (DE)**

Courier Press, Leamington Spa, England.

**0 103 083**

(56) References cited:

INTERNATIONAL SWITCHING SYMPOSIUM, 21st-25th September 1981, Montreal, session 13 B 3, pages 1-7 F. MELINDO et al.: "LSI components for digital line stages"

INTERNATIONL SWITCHING SYMPOSIUM, 21st-25th September 1981, Montreal, session 14 A, paper 1, pages 1-9 M. BALLARD: "The E10. S-TSS.5: a multipurpose digital switching system"

## Description

This invention relates to PCM switching systems, and especially to a self-routing modular PCM switching network as defined in the prior art portion of claim 1, i.e. with distributed control and diagnosis and a plurality of time division stages for distributed-control telephone exchanges, such PCM switching network being generally known from INTERNATIONAL SWITCHING SYMPOSIUM, 21st to 25th September 1981, Montreal, Session 32A paper 1, pages 1 to 7.

Several modular PCM switching networks with distributed control have already been developed.

For example, EP—A—56 600 based on European patent application 82 100 149.2 by CSELT describes a modular PCM switching network with distributed control and diagnosis and a plurality of time division stages, belonging to a centralized-control telephone exchange and made up of modular switching units consisting basically of integrated switching matrices with microprocessor-compatible asynchronous control, of integrated ancillary circuits for diagnosis, and of a microprocessor constituting the lowest level of a three-level hierarchical control network, said modular switching units, in the case of five-time division stages, being functionally diversified in a plurality of peripheral switching units folded in construction and comprising the first and fifth time division stages of said network, in a plurality of central switching units folded in construction and comprising the second and fourth time division stages, and in a plurality of unfolded central switching units comprising the third time division stage of the network, means also being provided for capillary diagnosis of all interstage links. This network, however, is designed for a centralized telephone control, and not for a distributed-control telephone exchange towards which current technology is evolving.

A "switching port" used to provide a modular network structure suitable for interfacing with a telephone control distributed on the network periphery is described in UK patent application No. 2 016 866 filed by International Standard Electric Corporation. This network comprises several stages consisting of "switching elements" made up of 16 switching ports each of which is an integrated component which switches the 32 16-bit channels of a single non-standard bidirectional PCM group. Each switching element is capable of identifying a free output channel through a wired logic network on each port. All other routing orders are provided stage by stage by the peripheral control, using the same channel on which the conversation will be routed. The application flexibility of the switching element in this system is limited by the use of wired logic routing units. Moreover, the routing procedures require that the messages sent be very detailed and in fact they are organized on 16 bits. Consequently, the system is not compatible with the standard PCM, and thus necessitates the use of special components which cannot be used in other parts of the telephone exchange or in other telephone applications incorporating standard PCM channels. This further reduces system flexibility and, furthermore, makes it necessary to have interface circuits for signal format conversion. Incompatibility with standard PCM systems is accentuated by the fact that the same channel which is subsequently used for speech is first used for signalling, which makes it necessary to supplement transmitted messages with an information determining whether the message is speech or signalling. Again concerning routing procedures, the network control is left to a great extent to the telephone exchange control. This makes it impossible to lighten the exchange's network management load efficiently, given that the telephone control must order the connection to be made on each individual switching element stage by stage. Finally, network diagnosis is not decentralized down to the individual switching element level and thus devolves entirely on the supervision units located at the network periphery.

Another example of a network for distributed-control telephone exchanges is described in a paper entitled "Time-division distributed switching system" presented at the International Switching Symposium, Montreal, September 21—25, 1981. This paper describes a switching network consisting of time switching stages controlled by microprocessors and of space switching stages with interstage connections carried out by 10-bit parallel PCM groups. The network is capable of routing PCM channels automonously with a "step-by-step" procedure on the basis of commands from the telephone control distributed on its periphery. Routing orders use the same channel which is subsequently used for speech; two additional bits serve to indicate whether the message is signalling or speech. This type of structure, however, presents a number of disadvantages; 1) It requires two different types of switching elements (namely time and space switching elements), rather than a single switching element; 2) The network expansion requires that interstage links be rearranged through a different configuration of space stages; 3) The time switching element does not operate on standard serial PCM groups and thus cannot be generally used in switching; 4) The network periphery is burdened by the need for interface circuits to convert standard serial PCM groups arriving from users and links in the format required within the switching network; 5) The use of 10-bit parallel PCM groups makes the connections between network switching elements cumbersome; 6) Switching capacity in terms of PCM channels handled by the basic module is limited; and 7) Here again, diagnosis is not decentralized down to the individual basic module level, and thus depends entirely upon the peripheral supervision units.

Further, a self-routing switching network for a telephone exchange with peripheral telephone control units and local network controllers associated to the single switching units is known from the paper "Proteo System: an Overview", International Switching Symposium, 21st to 25th September 1981, Montreal, Session 32 A paper 1 pages 1 to 7. Therein, dialogues are intended to take place among the network controllers to implement a high capacity exchange. One aspect of a message interchange system among controllers implemented by microprocessors is known from EP—A—17988, i.e. data storage devices.

For exploiting the advantages of a modular distributed-control exchange, a scheme for the dialogue among the network controllers and peripheral telephone control units in any association is to be designed.

The invention as defined in claim 1 provides for such scheme, starting out from a prior art of the above "Proteo System" and using, among other measures, the data storage devices known from EP—A—17988 and features enabling the single controllers to interface with a plurality of highways, in a manner so that the network controllers and the peripheral telephone control units shall not be burdened with dialogue management, which tasks, otherwise, would consume lot of the capacity of handling the connection requests.

The respective self-routing modular PCM switching network for distributed-control telephone exchanges according to the present invention consists of modular switching elements each of which comprises PCM switching matrices made up of special, large scale integration integrated circuits of general use in switching, a local controller consisting of a commercially available microprocessor, and special, large scale integration integrated circuits used for local diagnosis. The dialogue between the network controllers of each unit and the corresponding network controllers of the connected units and/or with the peripheral telephone control units distributed on the network periphery is permitted by special ancillary devices which connect the asychronous network controllers to each other and/or to the periphery via synchronous channels for control dialogue in a way which is compatible with standard PCM systems and thereby relieves the telephone control of network management tasks.

Embodiments of the invention will now be described with reference to the accompanying drawings, in which:

Fig. 1 shows general schematics of a PCM switching network embodying the invention;

Fig. 2 illustrates the PCM switching network of Figure 1 in folded form and its connection with the network periphery, and in particular with the telephone control;

Fig. 3, 4, 5 are block diagrams of the switching units used in the network of Fig. 1;

Fig. 6 is a block diagram of the circuit used for the dialogue between controllers.

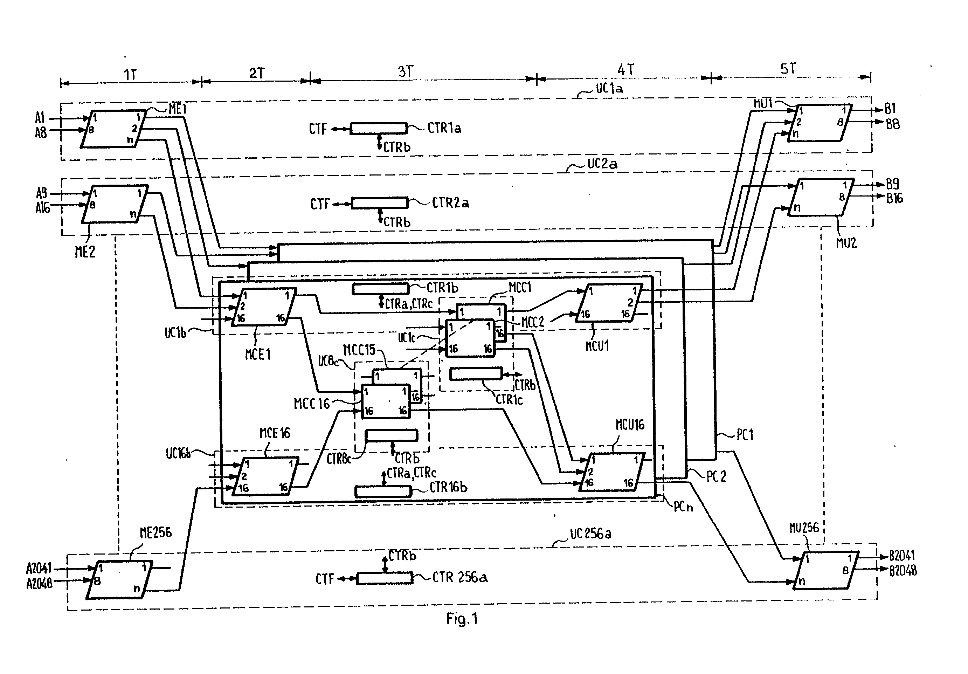

Figure 1 shows an example of switching network with five time division stages (1T, 2T, 3T, 4T, 5T) in the case of a transit exchange with 2048 incoming PCM links A1...A8, A9...A16, ...A2041...A2048, and 2048 outgoing (PCM links B1...B8, B9...B16, ...B2041...B2048, each intended to carry a standard PCM group with 32 8-bit channels.

The extension of the following considerations to network structures which differ in number of both channels and stages, or to exchanges of differing type is, as will be shown, within the normal ability of the skilled in the art.

The first stage consists of 256 rectangular PCM switching matrices ME1...ME256, having 8 inputs connected to an equal number of incoming lines and n outputs ($8 \leq n \leq 16$) towards the second stage.

The three central stages are organized in n planes PC1, PC2...PCn, referred to below as central switching planes and each including 16 square matrices capable of handling 16 incoming/outgoing groups. The Figure shows only plane PCn in detail, stage 2T matrices are designated with MCE1...MCE16, stage 3T matrices with MCC1...MCC16, and stage 4T matrices with MCU1...MCU16.

The fifth stage consists of 256 rectangular matrices MU1...MU256, identical to matrices ME, but capable of handling n input groups and 8 output groups.

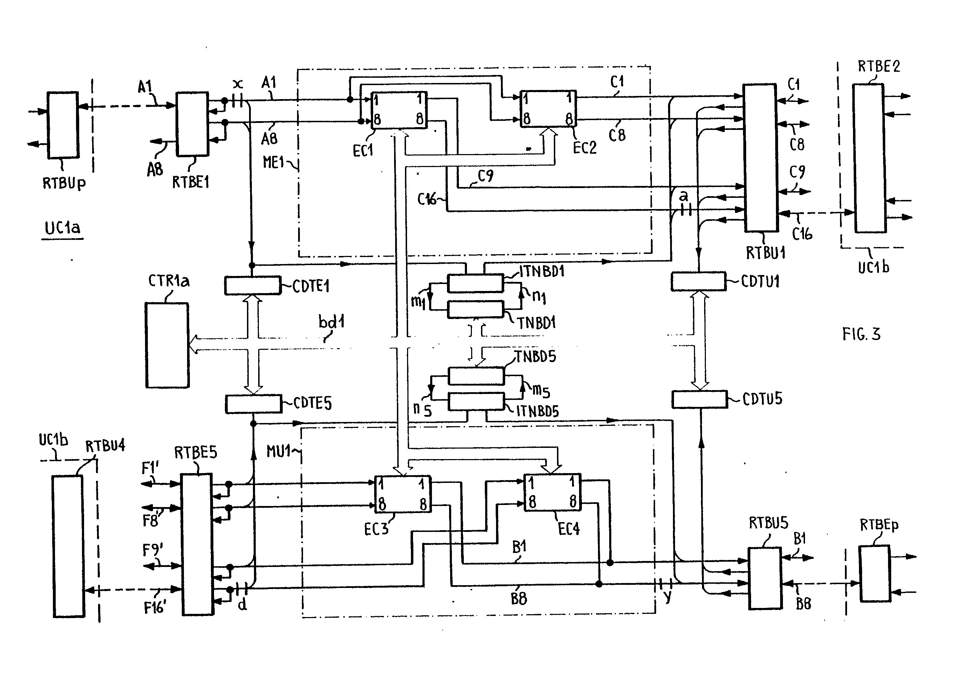

These matrices all start from a single switching element with 8 input groups and 8 output groups as described in EP—A—39 948 based on European patent application 81103628.4 by CSELT. Connections between individual elements so as to produce 8×n and 16×16 matrices are shown in Figures 3 to 5 of that application.

Connection between first stage matrices ME and second stage matrices MCE is such that all the first groups outgoing from the 256 matrices ME are connected in order to the 256 inputs of central plane PC1, the second groups are connected to the 256 inputs of central plane PC2, and so on up to the n-$^{th}$ groups, which are connected to the inputs of plane PCn. Connection between outputs of planes PC1...PCn and inputs of matrices MU1...MUn is the converse of connection between matrices ME and inputs of planes PC1...PCn.

Matrices MCE, MCC and MCU are connected to each other within each plane. More particularly, the first outgoing groups from the 16 matrices MCE1...MCE16 are connected in order to the 16 inputs of matrix MCC1, the second outgoing groups from the same matrices MCE1...MCE16 are connected in order to the 16 inputs of matrix MCC2, and so on up to the sixteenth outgoing groups, which are connected to the 16 inputs of matrix MCC16. Connection between matrices MCC and MCU is the converse of that between matrices MCE and MCC.

As shown in Figure 1, the position of central stage 3T made up of matrices MCC is symmetrical to the rest of the network.

Areas UC1a...UC256a, UC1b...UC16b, UC1c...UC8c enclosed by dashed lines indicate groupings of basic matrices each of which is

associated with a microprocessor controller CTR1a...CTR256a, CTR1b...CTR16b; CTR1c...CTR8c. These groupings correspond to effective constructional modules of the network, identified below as switching units. These modules are provided by a single type of printed circuit board, and use the same types of component. Modules differ in equipment condition, and may also have controllers with different software.

In particular, switching units UC1a...UC256a include a matrix ME and a matrix MU, i.e. a first stage matrix and a fifth stage matrix; units UC1b...UC16b include a matrix MCE and a matrix MCU of the second and fourth stages respectively; and units UC1c...UC8c each contain two matrices MCC. For the sake of brevity, units UC1a—UC256a, UC1b—UC16b, UC1c—UC8c will also be referred to below as UCa, UCb, UCc.

With this arrangement, the network of Figure 1 may be used as a folded network. Thus, the same switching unit will have available both the incoming group and the corresponding outgoing group which are both subject to governing and diagnostic functions by the same controller CTR.

Moreover, the constructional folding of switching units UCa and UCb makes it possible to divide the switching capacity of units UCa in two blocks of 256 channels used respectively in the first and fifth stage, and to divide the capacity of units UCb in two blocks of 512 channels used in the second and fourth stage. This has the advantage of providing a modular growth step for total network capacity of 256 PCM channels on the periphery, rather than the 512 channels which would be provided by using the individual switching unit in unfolded form, i.e. with two matrices of the same stage. Thus, in the event of failure of any one of said constructional units, the number of links remaining out of service can be limited to 256.

Network modular growth characteristics are good in that said growth is obtained by progressively increasing the number of switching units UCa in periphery, and by increasing the number of folded switching units UCb within each switching plane PC. Consequently, each increase of 16 switching units UCa corresponds to an increase of one switching unit UCb in each of the n switching planes PC.

The type of inter-stage connection described makes the network completely accessible.

The possibility of varying the number of central planes up to a maximum of 16 gives very low blocking probability values.

From the point of view of reliability, and in addition to the above mentioned periphery degradation modularity, the network central stages respond to failure with a degradation of traffic which is extremely limited in extent, given that any failure affects a maximum of 1024 interstage channels.

The tasks of controllers CTR include: management of dialogue with the CTR's of connected switching units; execution of routing orders (connection, disconnection, blocking); diagnosis of connections set up; autodiagnosis; alarm message generation and handling; identification of network configuration (recognition of connected units UC).

Controllers of the various switching units are connected to each other in a fashion analogous to that of the matrices. In particular, for dialogue with other controllers of the network or with the telephone control (not shown) for purposes of network management, a controller preferably has available a number of bidirectional communication channels not used for speech which number is equal to the number of PCM groups handled by the corresponding switching unit UC.

For instance a predetermined 64 kbit/s channel chosen out of the 32 channels forming the PCM interstage link can be used as a dialogue channel. Advantageously such a channel (which will be later referred to as channel R) carries the messages relating only to the channels belonging to that group (dialogue of the associated type).

Due to the presence of a channel which is permanently devoted to the dialogue among the controllers and which is separated from speech channels, it is unnecessary to use bits to distinguish between the messages relating to such dialogue and speech, consequently the network can handle standard PCM channels. The fact that such a dialogue is allotted a channel per group meets reliability requirements demanding a distribution of signalling paths.

Bidirectional arrows CTRa, CTRb, CTRc, CTF show connections of the controllers to each other and to the telephone control.

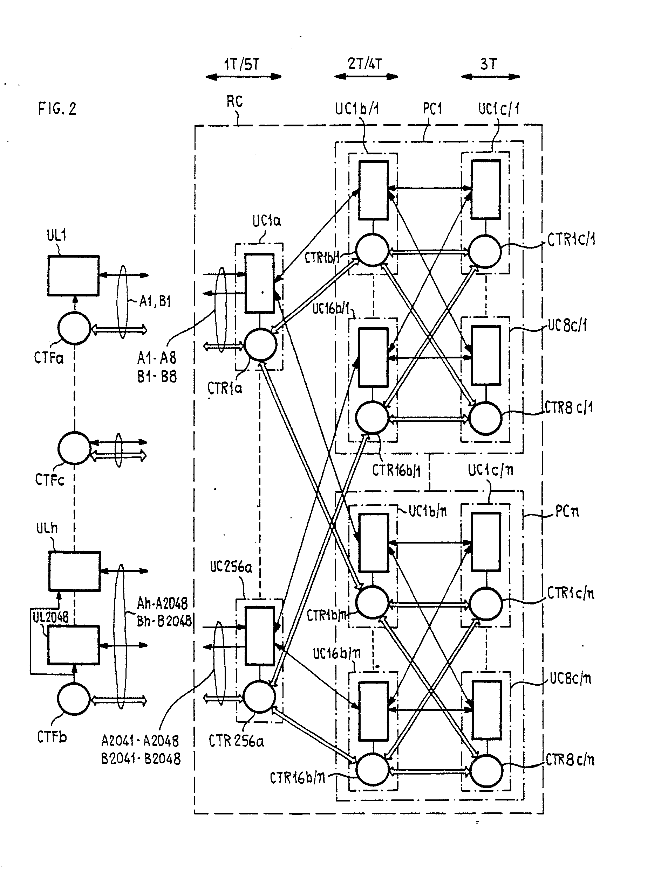

Connections between matrices and between controllers are also shown in Figure 2 together with connections with the telephone control. Figure 2 shows network RC of Figure 1 in symbolic and folded form, as well as its insertion in a distributed-control telephone exchange; peripheral units UL1...ULh...UL2048 of this exchange are shown connected to trunks or to subscribers. These units are associated singly (UL1) or in groups to peripheral telephone control units CTFa, CTFb; in the more general case the network is also connected to other peripheral telephone control units CTFc which can perform functions of a higher hierarhical level then those of CTFa and CTFb, or dialogue functions between said units. Auxiliary functions may also be performed. Units CTFb, CTFa and CTFc together make up the distributed telephone control. Dialogue between these units is through speech channels derived from PCM connections towards the network (in the drawing single line arrows) while dialogue between these units and the network controllers is through a particular PCM channel for each group towards the network (double line arrows). Also within network RC, single line arrows indicate speech connections and double line arrows indicate channels for dialogue between controllers.

The elements described with reference to Figure 1 have been indicated with the same symbols, an indication of the plane to which they belong being added for units UCb, UCc and their respective controllers. Connections between matrices are shown separately from those between controllers, even if in reality they are merely different channels of the same groups.

Figure 3 shows switching unit UC1a in detail. For purpose of example it is here supposed that matrices ME1 and MU1 perform an expansion from 8 to 16 groups or a concentration from 16 to 8 groups respectively. To this end, said matrices each consist of two switching elements EC1, EC2 and respectively EC3, EC4 of which the first two have inputs connected in parallel to groups A1...A8 while the other two have outputs connected in parallel to groups B1...B8. The four switching elements EC1...EC4 are connected to controller CTR1a through a bidirectional data bus bd1, C1...C16 indicate the 16 output groups of ME1 towards the second stage, and F1'...F16' indicate the input groups of MU1 from the fourth stage.

In addition to the switching matrices and the controller, the switching units also includes ancillary circuits for diagnosis CDTE1, CDTU1...CDTE5, CDTU5 and RTBE1, RTBU1...RTBE5, RTBU5, and circuits TNBD1, ITNBD1...TNBD5, ITNBD5 for dialogue with the controllers of units UCb (Fig. 1) and with distributed telephone control CTFa, CTFb, CTFc (Fig. 2). Numbers 1 and 5 indicate circuits belonging to first or fifth network stages, while letters E and U indicate position on input side (E) or output side (U) of switching unit. These circuits are all integrated circuits, making it possible for UC to be on a single printed circuit board. Circuits CDT are samplers having the task of extracting a bit octet relating to a channel of one of the incoming or outgoing PCM groups incoming to matrices ME1, MU1 or outgoing from them; the extraction occurs at an instant established by the controller. Circuits CDT then store the bit octet and supply it to the controller through data bus bd1.

The structure of circuits CDT is described in EP—A—34 776 based on European patent application 81101030.5 by CSELT.

Circuits RTBE and RTBU are full-duplex transceivers used here to perform the diagnosis of connection continuity, by back-transmitting the arriving signal to an analogous transceiver placed at the far end of a line and thus allowing the comparison between sent signal and back signal (echo check) without requiring further interstage connections. In case of unit UC1a remote transceivers are represented by circuits RTBE2 and RTBU4 placed at the second stage input and at the fourth stage output (and belonging to a unit UCb) and by transceivers RTBUp, RTBEp placed in the periphery, outside network RC, respectively on the outgoing side (that is on connections towards stage 1T) and on the incoming side (i.e. on the connections towards stage 5T).

The structure of circuits RTBE, RTBU is described in European patent No. 26 931 in the same of CSELT.

Circuits TNBD1 and TNBD5 are storage devices which make it possible for the controllers, which operate asynchronously, to carry out dialogue through a synchronous transmissive means such as a PCM link. The structure of circuits like TNBD1 and TNBD5 is described in EP—A—17 988 based on European patent application 80102064.5 by CSELT.

In the present application, circuits TNBD1, TNBD5 and the analogous circuits provided in switching units UCb and UCc of planes PC1...PCn are capable of transmitting and receiving up to a maximum of 16 8-bit words. These 16 words are part of 16 messages consisting of 7 words of which the first is a function code which indicates presence and type of message (e.g. connection orders), the five subsequent words represent the information content and the last word is a control word (e.g. representing the binary sum of the 6 preceding words). Transmission or reception of a complete message will thus occupy 7 frames. Circuits TNBD1 and TNBD5 are connected to controller CTR1a through the data bus, and to circuits ITNBD1 and ITNBD5 through connection $m_1$, $n_1$ and $m_5$, $n_5$ intended to convey a 32-channel PCM group.

Circuits ITNBD1 and ITNBD5 carry out serial/parallel and parallel/serial conversion as well as the following tasks:

1) Extracting the contents of channel R (i.e. the contents of the channel for dialogue among controllers) from each of the PCM links incoming to matrices ME1 to MU1 respectively, and sending said contents on an equal number of PCM channels of the serial flow on lines $m_1$, $m_5$; e.g., the contents of extracted channels is inserted on the even channels of said flow.

2) Transferring the contents of the even channels of a serial input group on connections $n_1$ and $n_5$ to channel R of PCM links outgoing from ME1, MU1.

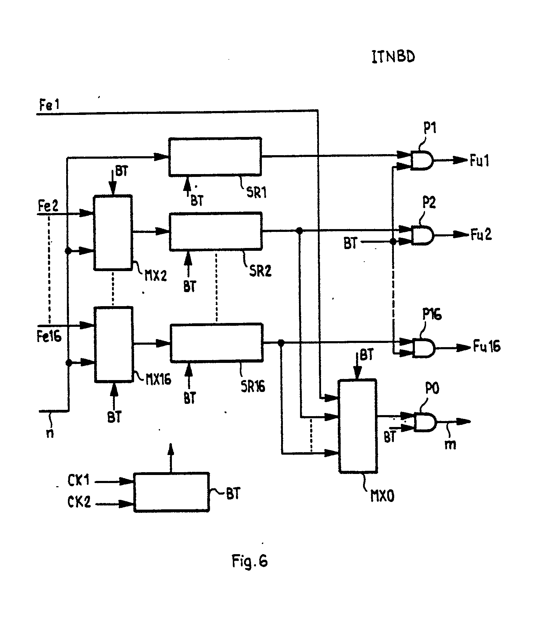

The order number of the channel from which contents will be extracted and on which contents will be inserted is determined by the relation between the 8-kHz synchronism of the frame incoming to the circuit and the frame synchronism of the PCM network in which the circuit is inserted. The structure of circuits ITNBD will be described below with reference to Figure 6.

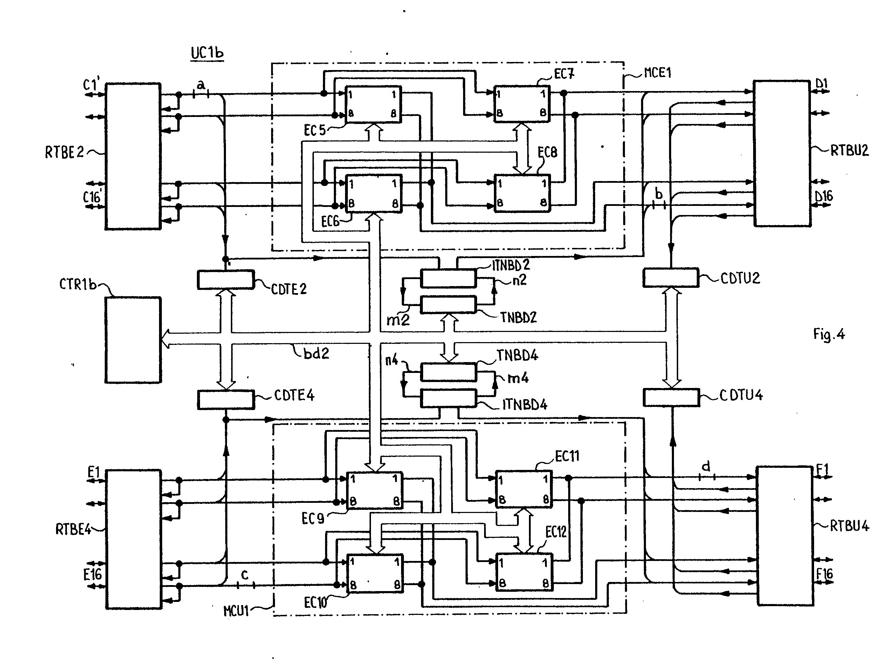

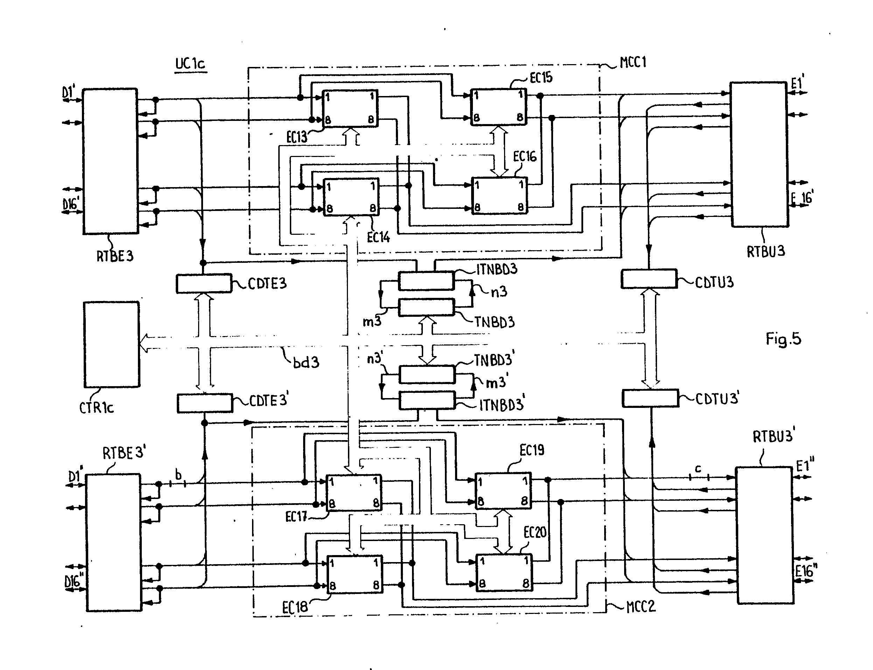

Figures 4 and 5 show the structure of switching units UC1b, UC1c, which is perfectly analogous to that of UC1a except for the different number of elements which constitute the matrices (four instead of two), with inputs and/or outputs connected in parallel so that the matrices switch 16 groups as described in the aforementioned EP—A—39 948 (CSELT). These elements are designated EC5—EC12 in Figure 4 and EC13—EC20 in Figure 5. Moreover, input/output groups of MCE1 are indicated with C1'...C16', D1...D16 (Figure 4), those of MCU1 with E1...E16, F1...F16, those of MCC1 with D1'...D16', E1'...E16' (Figure 5), and those of MCC2 with D1"...D16", E1"...E16". Also in Figures 4 and 5, circuits RTBE, RBTU, CDTE, CDTU, TNBD, ITNBD and lines *m*, *n* belonging to the different switching units, are indicated with the number of the stage to which they belong. Indices 3 and 3' have been used for the third stage.

The number of the PCM channels handled by individual switching units has been established so as to make it possible for current technology to produce the switching unit using a single replaceable structural element (printed circuit board). Said number has been determined on the basis of the characteristics of the switching matrices adopted (ME, MCE, MCC, MCU, MU) of the circuits (ITNBD, TNBD) for dialogue between controllers CTR, of the ancillary circuits for dianosis. (CDT, RTB) and of the commerically available microprocessors (CTR) and associated peripheral circuits, bearing in mind the standard printed circuit board formats such as DIN standard "Double Europe" format.

It should be noted that the organization of switching matrices ME1, MU1, MCE1, MCU1, MCC1 and MCC2 given as an example in Figures 3, 4 and 5 makes it possible to use matrices of even greater capacity (double, for example), should such matrices become available on the market, with the structure of the entire network of Figure 1 remaining unchanged.

The three switching unit types correspond to three different utilizations of the same printed circuit board.

The fact of employing network structures which make intensive and prevalent use of replaceable structural elements of the same type, such as that used·here, which elements also make use of a limited number of different component types, provides considerable advantages in terms of production, stocks and maintenance.

Circuits ITNBD and TNBD make it possible to reduce the load on the microprocessor controller considerably, in that such circuits take over the repetitive portion of the dialogue consisting of the storage and formation of the entire message. The use of standard components for serial dialogue would oblige the controllers to follow part of the dialogue thus subtracting resources from other functions.

The same pair of circuits TNBD and ITNBD can be advantagouesly used associated with telephone control units CTFb to insert and extract, dialogue messages relating to network control. Only circuit TNBD is necessary for units CTFa, CTFc handling a single channel.

Thanks to the use of these circuits and of the other ancillary circuits the control network can satisfactorily handle a large flow of routing orders, making it possible to use the network for auxiliary functions such as dialogue between the telephone control units distributed on the network periphery.

In this way, said telephone control units can be interconnected every time on the basis of a specific routing order sent to the network, thus avoiding the use of permanent connections within the network, which would limit its capacity.

Figure 6 shows a preferred embodiment of a circuit ITNBD, in which 16 incoming or outgoing groups are provided, and the channel for control dialogue is channel 0. Modifications required for application to a number of groups other than 16, as could be necessary for use in CTFb (Figure 2) are immediate. Incoming and outgoing groups are carried by lines Fe1...Fe16, Fu1...Fu16, while $m$, $n$ indicate lines which are analogous to lines $m_1...m_5$, $n_1...n_5$ of Figures 3—5. The circuit consists of 16 8-bit shift registers SR1, SR2...SR16; inputs of 15 of these, and more precisely those indicated with SR2...SR16, are connected with incoming lines Fe2...Fe16 through 2-input multiplexers MX2...MX16, which have a second input connected to line $n$; the outputs of the same registers are connected to outgoing lines Fu1...Fu16 through AND gates P1...P16 and to an equal number of inputs of a multiplexer MX0, which has a sixteeth input connected to line Fe1 and an output connected through AND gate P0 to line $m$.

Register SR1 has an input connected to line $n$ and the output connected through AND gate P1 to line Fu1.

A time base BT obtains control signals for multiplexers MX0, MX2...MX16 and for registers SR1...SR16, as well as enabling signals for the same registers and for gates P0...P16, from bit synchronism signal CK1 at 2.048 MHz and frame synchronism signal CK2 at 8 kHz. In particular, in the time allotted to channel 0 (time slot 0) multiplexer MX0 connects output $m$ to the input connected to Fe1, multiplexers MX2...MX16 connect register inputs to lines Fe2...Fe16, the registers are all enabled for shifting and gates P0...P16 are enabled.

For the rest of the frame, multiplexers MX2...MX16 connect registers SR2...SR16 to line $n$ and gates P1...P16 are disabled. Furthermore, in even time slots (2,4...30) registers SR2...SR16 are enabled in succession, multiplexer MX0 connects outputs of said registers in succession to its output and gate P0 is again enabled to transfer register contents to line $m$.

At time slot 0 of each frame thus the contents of channel 0 of group Fe1 pass to $m$, the contents of channel 0 of groups Fe2...Fe16 are loaded in SR2...SR16, and contents of channel 0 to PCM flow on $n$ are loaded in SR1. At the same time, the contents of registers SR1...SR16, loaded respectively in time slots 0, 2, 4...30 of the preceding frame, are emitted on lines Fu1...Fu16.

In time slots 2,4...30, registers SR2...SR16 respectively load the contents of the channels of the PCM flow on $n$, and that which was loaded at time slot 0 of the same frame is emitted on line $m$ through MX0.

We will now describe operation of the control network for diagnosis and routing.

We will first consider routing, and connection in particular. The routing order emitted by the telephone control will contain in the function code the information that a connection is to be made, and in the five subsequent words, the information concerning the network input channel and that concerning the network output channel and

group. As the dialogue is of the associated type, the identity of the incoming group is always univocally determined by the identity of the dialogue channel.

It will be supposed by way of example that the incoming channel is channel $x$ of group A1 (Figure 3) and that the outgoing channel is channel $y$ of group B8. The message will thus be emitted by CTFa (Figure 2) on the channel R of group A1.

Through transceivers RTBUp and RTBE1 (Figure 3), the first word of this message reaches ITNBD1 which inserts it in a suitable channel of the PCM flow trnasmitted on $m_1$ and forwards it to TNBD1. The latter recognizes that the message has arrived through the procedures described in the aforementioned EP—A—17 988 and stores the octet on the channel. The same operation is repeated for the six subsequent frames. After receiving the seven octets, TNBD1 activates the INTERRUPT output which is used by the local controller CTR1a to transfer the message from the memory of TNBD1 to its own data store through bus bd1.

CTR1a checks that the message is correct by using the last octet of the message itself. If the message is not correct CTR1 does not take the steps necessary to set up the connection and can start dianostic procedure sending a suitable alarm signal to the telephone control by using the connection channel between the fifth stage and such control.

The same checks on the message correctness are carried out in the successive stages, possible alarm messages being every time forwarded to the controller of the upstream stage.

If the message is correct, CTR1a locates a connection path between the first and second stages on the basis of the engagement of the interstage links and, if necessary, applying known algorithms to minimize transit delay. Once a connection path has been found, CTR1a forwards the connection order to ME1 through bus bd1.

It is assumed that the connection order concerns EC1 and causes switching of channel $x$ of A1 (input 1 of EC1) on channel $a$ of group C16 (output 8 of EC1) connected to input 1 of matrix MCE1 belonging to switching unit UC1b (Figure 1) of plane PC16. A routing through EC1 having been selected, input 1 of EC2, connected in parallel with EC1, is disabled.

When switching has been carried out and possibly after checking the continuity of the physical path chosen towards the second stage by hereinbelow described diagnostic procedures, CTR1a modifies the routing order received, replacing the identity of the input channel with that of the output channel of the stage. The rest of the information content of the connection message (network output channel and group) remains unchanged.

The modified order is sent to TNBD1 through data bus bd1; TNBD1 stores this order, inserts it in the suitable channel of PCM flow transmitted on $n_1$, and forwards it to ITNBD1 which in turn transfers it to the channel R of group C16 for seven successive frames.

Through RTBU1, RTBE2, ITNBD2, TNBD2 and bd2 (Figure 4) the new message reaches CTR1b which, from the identity of the dialogue channel, recognizes a connection order concerning the second stage, and in particular channel $a$ of C1', CTR1b locates a free channel from amongst the 512 outputs of MCE1 using the same procedure followed by CTR1a.

We will assume by way of example that the choice concerns channel $b$ of group D16, which is connected to input 1 of matrix MCC16 of UC8c (Figure 1). This input group of MCC16 corresponds to group D1'' of Figure 5. Controller CTR1b (Figure 4) selects in MCE1 the element which is to carry out the connection, in this case EC5; the connection concerns in particular input 8 and output 8 of EC5, so that CTR1b must disable channel $b$ of output 8 of EC6, whose outputs are connected in parallel with those of EC5. After checking that switching has been carried out, the relative data are stored in CTR1b, which forwards the new message to CTR8c through bd2, TNBD2, ITNBD2, RTBU2 and devices corresponding to RTBE3', ITNBD3', TNBD3' and bd3 (Figure 5).

With the network organization described, routing (as far as the group is concerned) is univocal from this point on; in fact, to reach output group B8 (Figure 1), it is necessary to access matrix MU1, which can be reached from MCC16 only through output 1 of the same matrix (corresponding to group E1'', Figure 5, and connected to input E16 of MCU1) and output 1 of MCU1 (group F1, Figure 4). Consequently, once the input channel to which the message refers is recognized, CTR8c can only select the channel within the first group (channel $c$, for example), make the connection and prepare the new message for CTR1b (Figure 1). The latter recognizes a connection order for the fourth stage and selects a channel (channel $d$, for example) in output group F1, which corresponds to group F16' at the input of MU1. After making the connection between channel $c$ of E16 and $d$ of F1 through EC12, CTR1b forwards the new message to CTR1a, which in turn makes MU1 connect channel $d$ of incoming group F16' and channel $y$ of outgoing group B8. This connection concerns input 8 and output 8 of EC4.

At this point connection within the network is set up; a confirmation message may be provided for the connection set up and is routed by CTR1a to the peripheral telephone control unit to which group B8 is connected.

Disconnections are carried out following the same procedures described for connection. The relevant message is emitted by the peripheral telephone control unit which has emitted the connection message (CTFa, Figure 2, in the example) and contains in its data field the identity of the incoming channel relating to the path to be released (channel $x$ of A1). The message is received by controller CTR1a of UC1a (Figure 3), which looks in its data store for the output channel and group associated with the input channel and group retrieved on the basis of the message received. In this case the output channel is channel

*a* and the group is group 16. CTR1a carries out disconnection in matrix ME1, diagnoses disconnection with CDTU1, modifies the data field of the message by replacing the identity of channel *x* with that of channel *a*, and transmits the disconnection message towards second stage controller CTR1b on the channel for control dialogue (channel R of output group 16). The procedure is then repeated in an analogous manner up to controller CTR1a for the fifth stage, which can forward the message confirming that disconnection has been carried out towards the periphery units connected to it.

Through circuits RTBE, RTBU, CDTE, CDTU the controllers of the individual stages can carry out diagnosis on any connection already set up towards the successive stage.

Diagnosis is carried out by extracting an octet of the input channel concerned through circuit CDTE and by comparing such octet wiht the said octet extracted by CDTU from the output channel of the stage, making allowance for delay in terms of number of frames introduced by transit through the matrix.

Said octet is sent by transceiver RTBE of the subsequent stage to CDTU, through transceiver RTBU of the stage in which diagnosis is carried out. In this way, the diagnosis concerns not only the matrix used in this stage, but also the connection of the matrix itself with other matrices belonging to subsequent stages.

Applying this procedure to all the network stages a "tangency" is obtained among diagnosis of the adjacent switching units in a whole connection between the network input and output, so that no part of the network is left undiagnosed.

Considering in particular diagnosis carried out in the second stage on the connection described by way of example, CTR1b calculates said transit delay, sends octet extraction commands to CDTE2 and CDTU2 respectively and finally compares the octets. If the comparison result is positive, CTR1b modifies the data field of the connection message received by replacing the identity of the input channel (a) with that of the output channel (b) found and by calculating the new value of the sum word. The message is afterwards forwarded with the already described procedure.

A negative result indicates the occurrence of a failure which may concern: matrix MCE1; transceiver RTBU2 of UC1b or that like RTBE3' in UC8c, all the interconnections among said blocks.

Moreover the failure may have affected also the peripheral units of controller CTR1b and more particularly samplers CDTE2 and CDTU2 and their interconnections.

In all these cases controller CTR1b forwards the connection message with a suitable function code to upstream controller CTR1a so that CTR1a may locate a new connection path and isolate the channel for control dialogue with CTR1b, and the PCM group physically associated with it.

The alarm message towards CTR1a will be forwarded through the connection between the fourth and fifth stage. Coverage of any failures of controller processing units (micoprocessor, memories) makes use of autodiagnosis methods of known type (parity check on the memories, software traps).

In conclusion, failure probably occurred within UC1b, or concerns transceiver RTBE3' of the subsequent stage and the relative connection.

Upstream controller CTR1a, on the basis of failure signallings it receives from CTR1b, isolates, according to procedures defined during design, the unit taken as faulty and sends the telephone control the alarm message containing the identity of such faulty unit.

The just described diagnostic method allows for several connection test procedures. For example, a connection may be tested immediately after being set up, all or part of the connections set up can be cyclicly checked, or both tests may be carried out assigning priority criteria which will be defined during design. It is generally preferred to give top priority to the connection which has just been set up.

The diagnosis procedures hitherto described are compatible with carrying out global procedures of known type for network supervision, carried out by peripheral units which use the switching network.

Again where the connection procedure is concerned, it may occur that the controller of a stage cannot forward the connection message towards the subsequent stage because it cannot find a free connection channel towards said subsequent stage (blocking).

With reference to the example described, it is supposed that the blocking involves the third stage, or in other words that it is CTR8c (Figure 1) which cannot find a channel which is free towards the fourth stage, to be connected with channel *b* of D1''.

CTR8c modifies the connection message for channel *b* by leaving the data field unchanged and inserting as function code that relating to the "routing blocking", and transmits the message to CTR1b (which had originated it) through a channel for control dialogue available on the link between the third and fourth stages.

After receiving the blocking message for channel *b* of output 16 of matrix MCE1, CTR1b locates in the memory the connection data relating to said output channel. After retrieving the connection data (channel *a* of C1'-input 1 of MC1 with channel *b* of D16-output 16 of MCE1), it disconnects the output channel of MCE1, and reroutes channel *a* towards a third stage matrix, excluding the link used in the first attempt.

The number of rerouting attempts within a switching plane PC may be selected during design. Once this threshold is exceeded, the blocking message is sent back to the first stage controller (in this case CTR1a) which had a given rise to the connection order; CTR1a will then proceed to reroute the connection on a plane PC other than PC16.

The preceding description clearly shows the advantages which the invention provides with respect to prior art in terms of modularity, flexibility of application, distribution of functions and performance, and particularly of capacity of the microprocessors free for routing control.

In particular, the present invention makes it possible to provide network structures which have capacities ranging from a few hundred to several hundred thousand PCM channels with a number of time stages varying from one (network consisting of a single 8×8 or 16×16 matrix) to seven, using a single type of construction module. For example, it would be possible to have a three stage network consisting of a single switching plane with a capacity of 8, 192 channels. For a given number of stages, the capacity may be varied by changing the number of matrices and their connections. For example, halving the number of matrices in a switching plane and connecting the first and second output groups of a matrix MCE to the first and second input groups of a matrix MCC yields switching planes of 4,096 channels; a five-stage network with 32 central planes can be obtained by using matrices ME with 16 input groups and 32 output groups, and matrices MU with 32 input groups and 16 output groups. In any case, high efficiency is always maintained in the ratio between hardware employed and the number of channels equipped.

A seven-stage network is also possible, though problems of transit delays and routing times make such a network inconvenient. In this case, however, the folded switching units would include respectively matrices of the first and seventh stages, of the second and sixth stages and of the third and fifth stages, the fourth stage switching unit being again unfolded.

Furthermore, the network can adapt itself easily to technological developments in the integrated elements which make it up, and provides a considerable control distribution so as to optimize the ratio between installed processing power in all equipment situations and the number of channels served.

The presence of a local network controller on each individual switching unit makes the network truly self-routing, in that the connecton of the PCM channel within the network is searched independently by the controller of the switching unit involved in each stage. In this way, the peripheral telephone control units are completely relieved of the task of locating a connection path within the network. The use of special integrated circuits for dialogue between switching unit controllers relieves the microprocessor of dialogue management and provides actuation time such that a large number of connection requests can be handled expeditiously.

Moreover such circuits are compatible with standard PCM systems: network components may thus be general-purpose, and it is not necessary to introduce interface circuits for format conversion.

The blocking characteristics of the network are such as to ensure neglible losses in any equipment situation for the maximum envisaged traffic levels; thanks to the use of controllers distributed on the switching units, the network can automatically find alternative routing paths in the event of blocking or internal failure without depending on the intervention of the peripheral telephone control units.

Transit delay on the PCM channels switched by the network is minimized by the use of strategies which can be applied by each switching unit network controller; the use of the specialized ancillary circuits for diagnosis makes it possible for the functions of diagnosis, failure localization and reconfiguration to be extended to the level of the individual constructional units and thus cover failures involving the connection lines between the individual basic modules making up the network.

The switching unit equipped with a controller and ancillary circuits for diagnosis is capable of performing autodiagnosis and configuration identification procedures, thus relieving the telephone exchange supervision organs of the heavy burdens afforded by these tasks.

Again thanks to the use of microprocessors for the local network controllers, by using different application programmes for the controllers of each unit and through suitable selection of the number and structure of central switching planes PC, it is possible to choose the ideal compromise between actuation times, blocking probability, diagnosis and network cost, and thus cover the entire range of possible telephone switching applications (transit, urban, local or mixed exchanges). For example, network structures with a limited number $n$ of internal planes make possible a reduction in the number of switching units employed and hence of cost; however, a larger number of possible routing attempts must be provided in the light of the higher blocking probability. This strategy will obviously give rise to longer actuation times in the switching network. On the contrary, with a larger number of planes it is possible to reduce the number of routing attempts given that the blocking probability is intrinsically low; short actuation times are thus possible.

Moreover, with a given equipment situation, it is possible to modify the controller programmes to provide a network with a sophisticated dianosis to the detriment of actuation speed or, vice versa, a network with less sophisticated diagnosis but which executes commands from the peripheral organs more quickly, as could be required if the exchange must handle new services (data networks for example).

**Claims**

1. Self-routing modular PCM switching network with several time division stages, belonging to a telephone exchange with peripheral telephone control units (CTFa...CTFc) distributed on the periphery, the switching network comprising folded modular switching units (UC1a...UC256a;

UC1b...UC16b; UC1c...UC8c) basically consisting: of integrated circuit switching matrices (ME1...ME256, MU1...MU256, MCE1...MCE16, MCU1...MCU16, MCC1...MCC16) with microprocessor-compatible control, of integrated ancillary circuits for diagnosis (RTBE1...RTBE5; RTBU1...RTBU5; CDTE1...CDTE5; CDTU1...CDTU5), and of a local network controller (CTR1a...CTR256a, CTR1b...CTR16b, CTR1c...CTR8c) in the form of a microprocessor, the local network controller (CTR1a...CTR8c) of each switching unit (UC1a...UC8c) being connected to the respective network controllers (CTR1a...CTR8c) of a plurality of units belonging to contiguous stages and/or to the peripheral telephone control units (CTFa...CTFc) by means of a channel having a determined time slot of each PCM group connecting contiguous stages and/or incoming in or outgoing from the network for control dialogue of the controllers with each other and with peripheral telephone control units (CTFa...CTFc), characterized in that with each network controller (CTR1a...CTR8c) and with each peripheral telephone control unit (CTFa...CTFc), integrated ancillary circuits (TNBD1...TNBD5; ITNBD1...ITNBD5) for said dialogue are associated which circuits comprise: storage devices (TNBD1...TNBD5) able on one side to asynchronously receive from one of the network controllers (CTR1a...CTR8c) or from one of the peripheral telephone control units (CTFa...CTFc) one or a plurality of messages consisting of a plurality of words, to store such message(s) and to insert the words of said message(s) into an equal number of the channels for dialogue of a plurality of frames of the PCM flow, and on the other side able to receive form the network one or a plurality of messages organized into a PCM flow and consisting of a plurality of words, and to store such words up to the complete reception of the message(s) and to asynchronously supply such message(s) to the associated controller (CTR) or peripheral telephone control unit (CTF); and devices (ITNBD1...ITNBD5) for serial-to-parallel and parallel-to-serial conversion, associated each with one of the storage devices (TNBD1...TNBD5) and able to extract in parallel from all the input groups of one of the switching matrices (ME1...MU256), in the time slot allotted to the channel for the control dialogue, the contents of said channel and supply it in form of PCM frames to the associated storage device (TNBD1...TNBD5), and able to distribute the messages organized in a single PCM flow coming from said storage devices (TNBD1...TNBD5) on the channels for the control dialogue of all the output groups.

2. Network according to claim 1, characterized in that one storage device (TNBD1...TNBD5) is provided for each switching matrix (ME1...MCC16).

3. Network according to claim 1 or 2, characterized in that said devices (ITNBD1...ITNBD5) carrying out serial/parallel and parallel/serial conversion include a plurality of shift registers (SR1...SR16) equal in number to the number of input or output groups of the associated matrix (ME1...MCC16), and in that the first register (SR1) has its input connected to a line (n) which conveys the PCM flow transmitted by the corresponding storage device (TNBD1...TNBD5) and its output connected to a first matrix output group, while the others (SR2...SR16) have their inputs each connected to the output of a 2-input multiplexer (MX2...MX16) wihch has a first input connected to one of the matrix PCM input groups (Fe2...Fe16) and the second input connected to the line (n) which conveys the PCM flow transmitted by the storage device (TNBD1...TNBD5), the outputs of said other registers being connected both to the matrix output groups (Fu2...Fu16) through AND gates (P2...P16) and to an equal number of inputs of a further multiplexer (MX0) which has a further input connected to the first input group (Fe1) of the matrix and the output connected to a line (m) which conveys the information carried by the channels for control dialogue to the storage device (TNBD1...TNBD5 Fig. 6).

4. Network according to claim 3, characterized in that said devices (ITNBD1...ITNBD5) carrying out serial/parallel and parallel/serial conversion also include a time base (BT) which, on the basis of bit and frame synchronisms of the PCM flow, generates enabling and command signals in each PCM flow frame for said shift registers (SR1...SR16), said multiplexers (MX0...MX16) and said AND gates (P1...P16) in such a way that in the time reserved to the channel for control dialogue the dialogue information in said frame is sampled from the matrix input groups (Fe1...Fe16) and the dialogue information supplied by the associated storage device (TNBD1...TNBD5) and having been stored in the registers in the preceding frame is transferred to the output groups; the multiplexers (MX2...MX16) connected to the inputs of the shift registers (SR2...SR16) are enabled in sequence to transfer to the registers the dialogue information supplied in that frame by the storage device (TNBD1...TNBD5), and the multiplexer (MX0) connected to the output of the registers (SR1...SR16) transfers in sequence the information which had been stored by said registers in the time slot of the channel for control dialogue of the preceding frame, to the storage device.

5. Network according to any of claims 1 to 4, characterized in that each switching unit (UC1a...UC8c) comprises a pair of matrices (ME1...MCC16) each associated with its ancillary circuits for diagnosis and dialogue among controllers (RTBE, RTBU; CDTE, CDTU, TNBD, ITNBD), the matrices (ME1...ME256, MU1...MU256) that relate to the extreme stage (1T, 5T) of the network respectively carrying out an expansion or a concentration of their input groups.

6. Network according to any of claims 1 to 5, characterized in that each switching unit (UC1a...UC8c) is physically contained in a single withdrawable and replaceable standard printed circuit board which constitutes the modular structural element of the network.

## Patentansprüche

1. Modulares PCM-Koppelnetz mit selbsttätiger Leitwegwahl und mit mehreren Zeitteilungsstufen, das zu einer Fernsprech-Vermittlung mit an der Peripherie verteilten Fernsprechsteuereinheiten (CTFa,...,CTFc) gehört und gefaltete modulare Schalteinheiten (UC1a,...,UC256a; UC1b,...,UC16b; UC1c,...,UC8c) umfaßt, die im wesentlichen aus folgenden Teilen bestehen; aus eine mikroprozessorkompatible Steuerung aufweisenden Schaltmatrizen (ME1,...,ME256, MU1,...,MU256, MCE1,...,MCE16, MCU1,...,MCU16, MCC1,...,MCC16) in Form integrierter Schaltkreise, aus integrierten Diagnose-Hilfsschaltungen (RTBE1,...,RTBE5; RTBU1 ...,RTBU5; CDTE1,...,CDTE5; CDTU1,...,CDTU5) und aus einem örtlichen Koppelnetz-Steuergerät (CTR1a,...,CTR256a, CTR1b,...,CTR16b, CTR1c,...,CTR8c) in Form eines Mikroprozessors, wobei das örtliche Koppelnetz-Steuergerät (CTR1a,...,CTR8c) jeder Schalteinheit (UC1a,...,UC8c) mit den jeweiligen Koppelnetz-Steuergeräten (CTR1a,...,CTR8c) einer Vielzahl von Einheiten, die zu benachbarten Stufen und/ oder zu peripheren Fernsprechsteuereinheiten (CTFa,...,CTFc) gehören, über einen eine gegebene Zeitlage aufweisenden Kanal jeden benachbarte Stufen verbindenden und/oder beim Koppelnetz ankommenden oder von ihm ausgehenden PCM-Bündels für den Steuerungsdialog der Steuergeräte untereinander und mit den peripheren Fernsprech-Steuereinheiten (CTFa...CTFc) verbunden ist, dadurch gekennzeichnet, daß jedem Koppelnetz-Steuergerät (CTR1a,...,CTR8c) und jeder der peripheran Fernsprechsteuereinheiten (CTFa,...,CTFc) integrierte Hilfsschaltungen (TNBD1,...,TNBD5; ITNBD1,...,ITNBD5) für diesen Dialog zugeordnet sind und diese Hilfsschaltungen folgende Teile umfassen: Speichervorrichtungen (TNBD1,...,TNBD5) die einerseits eine oder mehrere aus einer Mehrzahl von Wörtern bestehende Nachrichten von einem der Koppelnetz-Steuergeräte (CTR1a,...,CTR8c) oder von einer der peripheren Fernsprechsteuereinheiten (CTFa,...,CTFc) asynchron empfangen können, diese Nachricht(en) speichern können und die Wörter der Nachricht(en) in eine gleiche Anzahl der Dialog-Kanäle einer Mehrzahl von Rahmen des PCM-Flusses einsetzen können, und andererseits vom Koppelnetz eine oder eine Mehrzahl von Nachrichten, die in einen PCM-Fluß eingebaut sind und aus einer Mehrzahl von Wörter bestehen, empfangen und solche Wörter bis zum kompletten Empfang der Nachricht(en) speichern und die Nachricht(en) asynchron an das zugeordnete Steuergerät (CTR) oder die zugeordnete periphere Fernsprechsteuereinheit (CTF) liefern können; und Vorrichtungen (ITNBD1,...,ITNBD5) zur Serien/Parallel- und zur Parallel/Serien-Umsetzung, die jeweils mit einer der Speichervorrichtungen (TNBD1,...,TNBD5) verbunden sind und von allen Eingangsbündeln einer der Matrizen (ME1,...,MU256) in der dem Kanal für den Steuerungs-Dialog zugeteilten Zeitlage den Inhalt dieses Kanals parallel extrahieren und ihn in Form vom PCM-Rhamen an die entsprechenden Speichervorrichtungen (TNBD1,...,TNBD5) liefern können, und die die Nachrichten, die in einem einzigen PCM-Fluß organisiert sind, der von den Speichervorrichtungen (TNBD1,...,TNBD5) kommt, auf die Kanäle für den Steuerungs-Dialog aller der Ausgangsbündel verteilen können.

2. Koppelnetz nach Anspruch 1, dadurch gekennzeichnet, daß für jede Schaltmatrix (ME1,...,MCC16) eine Speichervorrichtung (TNBD1,...,TNBD5) vorhanden ist.

3. Koppelnetz nach Anspruch 1 oder 2, dadurch gekennzeichnet, daß die die Serien/Parallel- und die Parallel/Serien-Umsetzung durchführenden Vorrichtungen (ITNBD1,...,ITNBD5) eine Mehrzahl von Schieberegistern (SR1,...,SR16) enthalten, deren Anzahl gleich der Anzahl der Eingangsbündel oder Ausgangsbündel der zugeordneten Matrix (ME1,...,MCC16) ist, und daß das erste Register (SR1) mit seinem Eingang an eine Leitung (n) angeschlossen ist, die den von der entsprechenden Speichervorrichtung (TNBD1,...,TNBD5) gesendeten PCM-Fluß führt, und mit seimen Ausgang an ein erstes Matrix-Ausgangsbündel angeschlossen ist, während die anderen Register (SR2,...,SR16) jeweils mit ihrem Eingang an den Ausgang eines Zwei-Eingangs-Multiplexers (MX2,...,MX16) angeschlossen sind, dessen erster Eingang an eines der Matrix-PCM-Eingangsbündel (Fe2,...,Fe16) und dessen zweiter Eingang an die Leitung (n), die den von der Speichervorrichtung (TNBD1,...,TNBD5) gesendeten PCM-Fluß führt, angeschlossen ist, während die Ausgänge der anderen Register sowohl mit den Matrix-Ausgangsbündeln (Fu2,...,Fu16) über UND-Glieder (P2,...,P16) als auch mit einer gleichen Anzahl von Eingängen eines weiteren Multiplexers (MX0) verbunden sind, der mit einem weiteren Eingang mit dem ersten Eingangsbündel (Fe1) der Matrix und mit dem Ausgang mit einer Leitung (m) verbunden ist, die die von den Kanälen für den Steuerungs-Dialog geführte Information zur Speichervorrichtung (TNBD1,...,TNBD5; Fig. 6) bringt.

4. Koppelnetz nach Anspruch 3, dadurch gekennzeichnet, daß die die Serien/Parallel- und die Parallel/Serien-Umsetzung durchführenden Vorrichtungen (ITNBD1,...,ITNBD5) weiterhin einen Zeitgeber (BT) enthalten, der auf der Basis von Bit- und Rahmensynchronismen des PCM-Flusses Ingangsetz- und Befehlssignale in jedem PCM-Fluß-Rahmen für die Schieberegister (SR1,...,SR16), die Multiplexer (MX0,...,MX16) und die UND-Glieder (P1,...,P16) derart erzeugt, daß in der dem Kanal zum Steuerungs-Dialog zugeteilten Zeit die Dialoginformation in diesem Rahmen von den Matrix-Eingangsbündeln (Fe1,...,Fe16) extrahiert wird und die Dialoginformation, die von der zugeordneten Speichervorrichtung (TNBD1,...,TNBD5) geliefert wird und in den Registern im vorhergehenden Rahmen gespeichert worden ist, zu den Ausgangsbündeln gesendet wird; und daß die mit den Eingängen der Schieberegister (SR2,...,SR16) verbunden Multiplexer (MX2,...,MX16) aufeinanderfolgend in Gang gesetzt sind, um zu den Registern die in diesem Rahmen von der Speichervorrichtung (TNBD1,...,TNBD5) gelieferte Dialoginformation zu übertragen, und der mit dem Ausgang der Register (SR1,...,SR16) verbundene Multiplexer (MX0) in Aufeinanderfolge die von den Registern in der Zeitlage des Kanals für den Steuerungs-Dialog des vorhergehenden Rahmens gespeicherte Information zur Speichervorrichtung überträgt.

5. Koppelnetz nach einem der Ansprüche 1 bis 4, dadurch gekennzeichnet, daß jede Schalteinheit (UC1a,...,UC8c) zwei Matrizen (ME1,...,MCC16) umfaßt, von denen jede mit ihren Hilfsschaltungen für Diagnose und Dialog unter den Steuergeräten (RTBE, RTBU; CDTE, CDTU; TNBD, ITNBD) versehen ist, wobei diejenigen Matrizen (ME1,...,ME256, MU1,...,MU256), die sich auf die äußeren Stufen (1T, 5T) des Koppelnetzes beziehen, jeweils eine Expansion oder eine Konzentration ihrer Eingangsbündel durchführen.

6. Koppelnetz nach einem der Ansprüche 1 bis 5, dadurch gekennzeichnet, daß jede Schalteinheit (UC1a,...,UC8c) körperlich in einer einzigen entnehmbaren und austauschbaren Standardkarte mit gedruckter Schaltung enthalten ist, die das modulare Strukturelement des Koppelnetzes bildet.

**Revendications**

1. Réseau de commutation MIC modulaire et autochercheur, à plusieurs étages temporels, qui fait partie d'un central téléphonique avec des unités périphériques de commande téléphonique (CTFa...CTFc) distribuées sur la périphérie du réseau et qui comprend des unités de commutation modulaires repliées (UC1a...UC256a; UC1b...UC16b; UC1c...UC8c) constituées essentiellement par des matrices de commutation à circuit intégré (ME1...ME256, MU1...MU256, MCE1...MCE16, MCU1...MCU16, MCC1...MCC16) avec commande compatible avec un microprocesseur, par des circuits intégrés auxiliaires pour le diagnostic (RTBE1...RTBE5, RTBU1...RTBU5; CDTE1...CDTE5, CDTU1...CDTU5) et par un organe local de commande du réseau (CTR1a...C-TR256a, CTR1b...CTR16b, CTR1c...CTR8c) réalisé a l'aide d'un microprocesseur, l'organe local de commande du réseau (CTR1a...CTR8c) de chaque unité de commutation (UC1a...UC8c) étant connecté aux organes de commande du réseau (CTR1a...CTR8c) d'une pluralité d'unités faisant partie d'étages contigus et/ou aux unités périphérique de commande téléphonique (CTFa...CTFc), à l'aide d'une voie correspondant à un intervalle de temps déterminé de chaque faisceau MIC de connexion entre étages contigus et/ou d'entrée/sortie du réseau pour le dialogue de commande des organes de commande entre eux et avec les unités périphériques de commande téléphonique (CTFa...CTFc), caractérisé en ce que chaque organe de commande (CTR1a...CTF8c) du réseau et chaque unité périphérique de commande téléphonique (CTFa...CTFc) sont associés à des circuits intégrés (TNBD1...TNBD5; ITNDB1...ITNBD5) auxiliaires pour ledit dialogue qui comprennent: des dispositifs de mémorisation (TNBD1...TNBD5) aptes d'un côté à recevoir de manière asynchrone d'un organe de commande du réseau (CTR1a...CTR8c) ou d'une unité périphérique de commande téléphonique (CTFa...CTFc) un ou plusieurs messages constitués par une pluralité de mots, à mémoriser ce(s) message(s) et à insérer les mots dudit message ou desdits messages dans autant de voies pour le dialogue d'une pluralité de trames de la transmission MIC, et aptes de l'autre côté à recevoir du réseau un ou plusieurs messages organisés comme une transmission MIC et constitués par une pluralité de mots, à mémoriser ces mots jusqu'à la réception complète du message ou des messages et à fournir de manière asynchrone le(s) message(s) à l'organe de commande (CTR) ou à l'unité périphérique de la commande téléphonique (CTF) leur associés; et des dispositifs (ITNBD1...ITNBD5) de conversion série/parallèle et parallèle/série, dont chacun est associé à un dispositif de mémorisation (TNBD1...TNBD5) et est apte à extraire en parallèle de tous les faisceaux d'entrée d'une matrice de commutation (ME1...MU256), pendant l'intervalle de temps reservé à la voie de dialogue pour la commande, le contenu de ladite voie et à le fournir sous la forme de trames MIC au dispositif de mémorisation correspondant (TNBD1...TNBD5), et est apte à répartir entre les voies de dialogue pour la commande de tous les faisceaux de sortie les messages organisés dans une seule transmission MIC en provenance desdits dispositifs de mémorisation (TNBD1...TNBD5).

2. Réseau suivant la revendication 1, caractérisé en ce qu'on a un dispositif de mémorisation (TNBD1...TNBD5) pour chaque matrice de commutation (ME1...MCC16).

3. Réseau suivant la revendication 1 ou 2, caractérisé en ce que lesdits dispositifs (ITNBD1...ITNBD5) de conversion parallèle—série et série—parallèle comprennent une pluralité de registres à décalage (SR1...SR16), en nombre égal au nombre des faisceaux d'entrée ou sortie de la matrice (ME1...MCC16) correspondante, et en ce que le premier registre (SR1) a l'entrée connectée à une ligne (n) qui achemine la transmission MIC en provenance du dispositif de mémorisation correspondant (TNBD1...TNBD5) et a la sortie connectée à un premier faisceau de sortie de la matrice, tandis que les autres registres (SR2...SR16) ont l'entrée connectée à la sortie d'un multiplexeur à deux entrées (MX2...MX16) qui a une première entrée connectée à un des faisceaux MIC (Fe2...Fe16) d'entrée de la matrice et l'autre entrée connectée à la ligne (n) qui achemine la transmission MIC en provenance du dispositif de mémorisation (TNBD1...TNBD5), la sortie des autres registres étant connectée aussi bien aux faisceaux de sortie (Fu2...Fu16) de la matrice à travers des portes logiques ET (P2...P16), qu'à autant d'entrées d'un ature multiplexeur (MX0) ayant une entrée ultérieure connectée au premier faisceau d'entrée (Fe1) de la matrice et la sortie connectée à une ligne (m) qui envoie les informations acheminées par les voies de dialogue pour la commande au dispositif de mémorisation (TNBD1...TNBD5; Fig. 6).

4. Réseau suivant la revendication 3, caractérisé en ce que lesdits dispositifs (ITNBD1...ITNBD5) de conversion série-parallèle et parallèle-série comprennent en outre une base de temps (BT) qui, sur la base des synchronismes de bit et de trame de la transmission MIC, engendre en chaque trame de la transmission MIC des signaux de validation et commande pour lesdits registres à décalage (SR1...SR16), lesdits multiplexeurs (MX0...MX16) et lesdites portes ET (P0...P16), de telle manière que dans le temps reservé à la voie de dialogue pour la commande les informations de dialogue présentes dans cette trame soient extraites des faisceaux d'entrée (Fe1...Fe16) de la matrice et les informations de dialogue fournies par le dispositif de mémorisation (TNBD1...TNBD5) correspondant et stockées dans les registres dans la trame précédente soient transférées aux faisceaux de sortie; les multiplexeurs (MX2...MX16) connectés aux entrées des registres à décalage (SR2...SR16) soient validés en séquence à transférer aux registres les informations de dialogue fournies dans ladite trame par le dispositif de mémorisation (TNBD1...TNBD5), et le multiplexer (MX0) connecté à la sortie des registres (SR1...SR16) transfère en séquence au dispositif de mémorisation les informations stockées par lesdits registres dans l'intervalle de temps de la voie de dialogue pour la commande de la trame précédente.

5. Réseau suivant l'une quelconque des revendications de 1 à 4, caractérisé en ce que chaque unité de commutation (UC1a...UC8c) comprend une paire de matrices (ME1...MCC16), chacune associée à ses circuits auxiliaires pour le diagnostic et pour le dialogue entre organes de commande (RTBE, RTBU; CDTE; CDTU; TNBD; ITNBD), les matrices (ME1...ME256, MU1...MU256) relatives aux étages extrèmes (1T, 5T) du réseau effectuant une expansion ou respectivement une concentration de leurs faisceaux d'entrée.

6. Réseau suivant l'une quelconque des revendications de 1 à 5, caractérisé en ce que chaque unité de connection (UC1a...UC8c) est physiquement contenue dans une seule carte de circuit imprimé normalisée qui peut être extraite et remplacée et qui forme l'élément structurel modulaire du réseau.

Fig.1

FIG. 2

FIG. 3

0 103 083

Fig. 4

Fig.5

0 103 083

Fig.6